(19) Europäisches Patentamt
European Patent Office
Office européen des brevets

(11) Veröffentlichungsnummer : **0 151 991**
**B1**

(12) # EUROPÄISCHE PATENTSCHRIFT

(45) Veröffentlichungstag der Patentschrift : **09.09.87**

(51) Int. Cl.⁴ : **C 08 G 77/22**, C 08 G 77/26, C 08 G 77/38, C 08 G 77/04

(21) Anmeldenummer : **85100759.1**

(22) Anmeldetag : **25.01.85**

(54) **Platin- und/oder Palladium-haltige Organopolysiloxan-Ammoniumverbindungen, Verfahren zu ihrer Herstellung und Verwendung.**

(30) Priorität : **10.02.84 DE 3404702**

(43) Veröffentlichungstag der Anmeldung : **21.08.85 Patentblatt 85/34**

(45) Bekanntmachung des Hinweises auf die Patenterteilung : **09.09.87 Patentblatt 87/37**

(84) Benannte Vertragsstaaten : **AT BE CH FR GB IT LI NL**

(56) Entgegenhaltungen :
**EP-A- 0 072 474**
**DE-A- 3 120 195**
**DE-A- 3 131 954**

(73) Patentinhaber : **Degussa Aktiengesellschaft**
**Weissfrauenstrasse 9**
**D-6000 Frankfurt am Main 1 (DE)**

(72) Erfinder : **Panster, Peter, Dr.**
**Im Lochseif 8**
**D-6458 Rodenbach (DE)**
Erfinder : **Englisch, Marlies**
**Fuldaer Strasse 19**
**D-6458 Rodenbach (DE)**
Erfinder : **Kleinschmit, Peter, Dr.**
**Wildaustrasse 19**
**D-6450 Hanau 9 (DE)**

**EP 0 151 991 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Platin- und/oder Palladiumenthaltende Organopolysiloxan-Ammoniumverbindungen, bei denen das Platin bzw. Palladium in komplexer anionischer Form an eine Organopolysiloxan-Matrix gebunden ist. Die in Wasser und organischen Lösungsmitteln unlöslichen Edelmetall-haltigen Systeme stellen wertvolle Katalysatoren für Hydrosilylierungs- und Hydrierungsreaktionen dar, die sich teilweise durch eine hohe Aktivität sowie Selektivität auszeichnen und sich in sehr einfacher Weise synthetisieren sowie nachbehandeln lassen. Verfahren zur Herstellung und Nachbehandlung dieser neuen Verbindungen werden beschrieben.

Edelmetallverbindungen, die über kovalente oder ionische Bindungen an eine polymere unlösliche Matrix gebunden sind, weisen beim Einsatz als Katalysatoren vom theoretischen Ansatz her eine Reihe von Vorteilen gegenüber vergleichbaren, in löslicher Form eingesetzten Verbindungen auf :

Neben der wesentlich leichteren Abtrennung der edelmetallhaltigen Verbindung vom Produkt oder Substrat und ihrer Recyclierung kann das wertvolle Edelmetall leichter zurückgewonnen werden, die katalytische Standzeit kann verlängert und die korrosive Wirkung der oft salzartigen Metallverbindungen kann stark reduziert werden. Intensive Arbeiten wurden und werden auf diesem Gebiet von zahlreichen Arbeitsgruppen durchgeführt und der Stand der Technik ist von diesen in letzter Zeit bereits in mehreren Übersichtsartikeln, z. B. durch D. D. Whitehurst in CHEMTECH, Jan. 1980, Seite 44 oder durch R. H. Grubbs in CHEMTECH, Aug. 1977, Seite 512 oder auch durch D. C. Bailey und S. H.Langer in Chem. Rev. 81, 2, 109 (1981), zusammengefaßt worden.

Als Matrix bzw. Trägermaterial verwendet wurden für diesen Zweck meistens organische Polymersysteme, wie z. B. Polystyrol. Diese weisen im allgemeinen jedoch keineswegs die Qualitäten auf, die einen guten Katalysatorträger auszeichnen sollten, denn sie besitzen keine festliegende Struktur, ihre Konformation und damit Oberfläche sowie Volumen der einzelnen Partikel hängen stark von äußeren Parametern, wie Temperatur, Druck und Lösungsmittel ab. Ein Schwellen der Träger im verwendeten Solvens ist stets notwendig, um ein Vordringen der Reaktanten zu den Katalysezentren zu ermöglichen und die Reaktionsgeschwindigkeit nicht diffusionskontrolliert werden zu lassen. Die hohe Mobilität der Matrix gestattet auch das Zusammenkommen fixierter Metalleinheiten, so daß eine unerwünschte Bildung katalytisch inaktiver Mehrkernkomplexe ermöglicht wird. Darüber hinaus kann es auch passieren, daß sich die polymere Matrix unerwünschterweise in dem verwendeten Reaktionsmedium auflöst.

Anorganische Polymersysteme, wie z. B. Kieselsäuren, Kieselgele oder Aluminiumoxid, eignen sich im Prinzip aufgrund der festliegenden starren Struktur, der wesentlich höheren Temperatur- und Alterungsbeständigkeit, der leichten Zugänglichkeit der fixierten Metalleinheiten wesentlich besser für diese Zwecke, doch besitzen sie durchwegs einen gravierenden Nachteil insofern, als die Anzahl der funktionellen Gruppen, über die eine Fixierung von Metallverbindungen vollzogen werden kann, relativ gering ist, so daß viel Trägerballast mit dem Katalysator herumgeschleppt wird.

Vor kurzer Zeit konnten, wie z. B. in den deutschen Offenlegungsschriften 30 29 599 und 31 31 954 beschrieben, Katalysatorsysteme entwickelt werden, bei denen Metallverbindungen über kovalente Donor-Akzeptor-Bindungen an Träger fixiert sind, die aus unlöslichen z. B. Phosphor- oder Stickstoffhaltigen Organopolysiloxanen bestehen und erwartungsgemäß auch die guten Eigenschaften anorganischer Träger besitzen, aber nicht deren Nachteile. Darüber hinaus lassen sie sich quasi maßgeschneidert herstellen, z. B. durch Einbau von Vernetzern oder Cokatalysatoren.

Besonders interessant und daher Aufgabe der vorliegenden Erfindung war die Entwicklung von Systemen auf Basis von Platin und/oder Palladium, bei denen komplexe anionische Verbindungen dieser beiden Metalle über ionische Bindungen an einem Ammoniumgruppen-haltigen Organopolysiloxan-Träger fixiert sind. Platin-haltige Organopolysiloxane sind in der deutschen Patentschrift 24 00 039 zwar schon beschrieben worden, doch handelte es sich hierbei um lösliche Verbindungen, die daher auch die genannten Nachteile beim Einsatz als Katalysator besitzen.

Die erfindungsgemäßen Platin- und Palladium-haltigen polymeren Organosiloxan-Ammoniumverbindungen sind dadurch gekennzeichnet, daß sie aus Einheiten der allgemeinen Formel

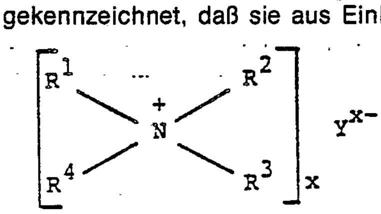

(1)

aufgebaut sind, in der $R^1$, $R^2$ und $R^3$ für eine Gruppe der allgemeinen Formel (2) stehen,

$$R^5{-}SiO_{3/2} \quad (2)$$

in der $R^5$ wiederum für eine Alkylengruppe mit 1 bis 12 C-Atomen, eine Cycloalkylengruppe mit 5, 7 oder

8 C-Atomen oder für Einheiten

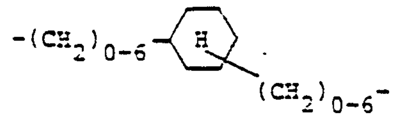 bzw. 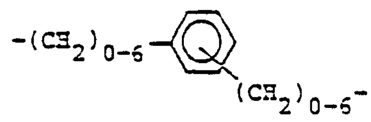

steht wobei $R^1$, $R^2$ und $R^3$ gleich oder verschieden sein können und die freien Valenzen der Sauerstoffatome entweder durch Siliciumatome weiterer Gruppen der Formel (2) und/oder durch vernetzende Brückenglieder der Formeln

$SiO_{4/2}$ oder $SiR'O_{3/2}$ oder $SiR'_2O_{2/2}$ bzw.
$TiO_{4/2}$ oder $TiR'O_{3/2}$ oder $TiR'_2O_{2/2}$ bzw.
$AlO_{3/2}$ oder $AlR'O_{2/2}$

abgesättigt sind, wobei R' für eine Methyl- oder Ethylgruppe steht, das Verhältnis zwischen den Siliciumatomen in (2) zu den Brückenatomen Silicium, Titan und Aluminium von 1 : 0 bis 1 : 10 betragen kann,

$R^4$ denselben Bedeutungsumfang haben kann wie $R^1$, $R^2$ und $R^3$ oder für Wasserstoff, eine 1 bis 10 C-Atome enthaltende lineare oder verzweigte Alkylgruppe, eine 5 bis 8-C-Atome enthaltende Cycloalkyl- oder die Benzylgruppe steht $Y^{x-}$ für

$PtCl_4^{2-}$, $PtCl_6^{2-}$,
$PtBr_4^{2-}$, $PtBr_6^{2-}$
$PdCl_4^{2-}$, $PdCl_6^{2-}$,
$PdBr_4^{2-}$, $PdBr_6^{2-}$

und gegebenenfalls für ein anorganisches oder organisches 1- bis 3-wertiges Anion einer anorganischen oder organischen Protonensäure, die mit Aminbasen stabile Salze zu bilden imstande ist, oder die Hydroxygruppe steht und

x eine Zahl von 1 bis 3 bedeutet.

Es hat sich gezeigt, daß $R^5$ eine lineare oder verzweigte Alkylengruppe sein kann, ohne daß erhebliche stoffliche Unterschiede des Endprodukts auftreten.

Im Polymerverband können mehrere komplexe Anionen des Platins und/oder des Palladiums nebeneinander vorliegen, das molare Verhältnis zwischen den Platin- und/oder Palladiumhaltigen zu den übrigen anorganischen oder organischen Anionen sollte jedoch vorteilhafterweise innerhalb des Bereichs 1 : 0 bis 1 : 100 liegen.

Typische Beispiele für anorganische oder organische Anionen, die neben den komplexen Anionen des Platins und/oder Palladiums im Polymerverband sein können, sind Halogenid, Hydroxid, Hypochlorit, Sulfat, Hydrogensulfat, Nitrit, Nitrat, Phosphat, Carbonat, Hydrogencarbonat, Chlorat, Perchlorat, Chromat, Dichromat, Cyanid, Rhodanid, Sulfid, Hydrogensulfid, Selenid, Tellurid, Borat, Metaborat, Azid, Tetrafluoroborat, Tetraphenylborat, Hexafluorophosphat, Acetat, Propionat, Oxalat, Trifluoracetat, Trichloracetat oder Benzoat. Besonders bevorzugt sind hiervon Chlorid, Bromid, Jodid, Hydroxid, Sulfat, Hydrogensulfat, Nitrat, Carbonat, Hydrogencarbonat und Tetrafluoroborat.

Der Einbau der Silicium-, Titan- oder Aluminium-haltigen Vernetzer dient einer Steuerung der Platin- und/oder Palladiumdichte im Feststoff, einer Steuerung der Porosität, mit der wiederum Einfluß auf die Selektivität des Katalysators genommen werden kann, und einer Steuerung der Oberflächeneigenschaften hinsichtlich Hydrophilie/Hydrophobie. Daneben kann der Vernetzer auch die Funktion eines sog. Aktivators oder Cokatalysators übernehmen.

Besonders bevorzugt sind vom Gesichtspunkt der thermischen Stabilität und der Inertness gegenüber chemischen Angriffen, insbesondere Basen gegenüber, die polymeren Ammoniumverbindungen nach Formel (1), wobei $R^1$, $R^2$ und $R^3$ die gleiche Bedeutung haben und insbesondere dann, wenn $R^1$, $R^2$ und $R^3$ miteinander identisch sind. Nach einer vorzugsweisen Ausführungsform der Erfindung sind $R^1$, $R^2$ und $R^3$ miteinander identisch und $R^4$ gleich Methyl.

Besondere Vorteile bezüglich der Verfügbarkeit der Ausgangsmaterialien und der stofflichen Eigenschaften der polymeren Platin- und Palladium-haltigen Organosiloxan-Ammoniumverbindung liegen bei Verbindungen, aufgebaut aus Polymereinheiten der Formel

$$\left[(H_3C)N(CH_2CH_2CH_2SiO_{3/2})_3\right]_x^+ \; Y^{x-}$$

vor, in der $Y^{x-}$ denselben Bedeutungsumfang wie in Formel (1) hat.

Im Hinblick auf den Einsatz der Platin- und/oder Palladium-haltigen Organopolysiloxan-Ammoniumverbindungen als Katalysatoren erweist es sich oft als vorteilhaft bezüglich der Aktivität und z. T.

auch Selektivität, diese nach ihrer Synthese chemisch zu modifizieren. Diese Modifizierung besteht in einer Erniedrigung der Oxidationsstufe des gebundenen Platins und/oder Palladiums.

Hierzu wird eine Umsetzung mit Reduktionsmitteln, wie Formaldehyd, Hydrazin, Alkali- oder Erdalkalimetallborhydrid, Boranverbindungen, Aluminiumhydriden, Aluminiumalkylen, Wasserstoff, Hydrogensilanen oder Alkoholen bei Gesamtdrucken von 1 bis 300 bar und Temperaturen von — 100 bis 350 °C, vorgenommen.

Gegenstand der Erfindung sind auch Verfahren zur Herstellung der Platin- und/oder Palladium-haltigen Organopolysiloxan-Ammoniumverbindungen. Ein Verfahren ist dadurch gekennzeichnet, daß man eine in der DE-OS 31 20 195 beschriebene Organopolysiloxan-Ammoniumverbindung, bestehend aus Einheiten der Formel (1), wobei $Y^{x-}$ für 1- bis 3-wertiges Anion einer anorganischen oder organischen Protonensäure steht, mit stöchiometrischen, unterschüssigen oder überschüssigen Mengen von gegebenenfalls kristallwasserhaltigen Ausgangsverbindungen des Platins und/oder Palladiums aus der Gruppe

$$M_2PtCl_4,\ M_2PtCl_6$$
$$M_2PtBr_4,\ M_2PtBr_6$$
$$M_2PdCl_4,\ M_2PdCl_6$$
$$M_2PdBr_4,\ M_2PdBr_6,$$

wobei M für Lithium, Natrium, Kalium, Ammonium oder Wasserstoff steht, in Wasser oder einem polaren organischen Lösungsmittel, das die Pt- und/oder Pd-Verbindungen wenigstens teilweise zu lösen imstande ist, zum gegenseitigen teilweisen oder vollständigen Austausch der Anionen nach dem statischen oder dynamischen Prinzip umsetzt, den metallhaltigen Feststoff anschließend wäscht, gegebenenfalls von der flüssigen Phase abtrennt und ihn gegebenenfalls trocknet sowie in beliebiger Reihenfolge mahlt, klassifiziert und tempert. Die Trocknung des ausgetauschten Produktes kann bei Raumtemperatur bis 250 °C, gegebenenfalls ebenfalls unter Vakuum durchgeführt werden. Eine Mahlung des Feststoffs kann natürlich auch bereits vor der Einführung der komplexen Platin- oder Palladium-Anionen in trockener Form oder in Suspension erfolgen. Hierdurch wird verständlicherweise der Austausch beschleunigt, der allerdings wegen der Feinheit der Feststoffpartikel dann nur noch nach dem dynamischen Prinzip vollzogen werden kann. Selbstverständlich ist dabei auch eine Mahlung während oder kurz nach dem Austausch möglich.

Eine Temperung des Produkts erweist sich im Hinblick auf eine Erhöhung der Stabilität der Matrix oft als sinnvoll. Sie besteht in einer Temperaturbehandlung über einen Zeitraum von mindestens einer Stunde bis zu vier Tagen bei 150-400 °C und gegebenenfalls unter Verwendung von Vakuum.

Obwohl Wasser das bevorzugte Reaktionsmedium darstellt, in dem die Einführung der komplexen Platin- und/oder Palladium-Anionen erfolgen kann, sind für diesen Zweck prinzipiell auch andere Lösungsmittel verwendbar, die aufgrund der Löslichkeiten der einsetzbaren Metall-Ausgangsverbindungen und der als Nebenprodukte anfallenden Alkalimetallsalze allerdings eine sehr polare Natur aufweisen müssen. Derartige Lösungsmittel sind z. B. Methanol, Ethanol, n- und i-Propanol, Aceton, Dimethylformamid, Dimethylsulfoxid, Hexamethylphosphorsäuretriamid, aliphatische oder aromatische Nitroverbindungen oder Nitrile oder Gemische daraus bzw. mit Wasser.

Die Temperatur, bei der die Einführung der komplexen Platin- oder Palladium-Anionen erfolgen kann, ist als nicht besonders kritisch anzusehen, denn sie kann prinzipiell bei, unterhalb oder oberhalb Raumtemperatur liegen. Im Hinblick auf einen besonders raschen Austausch der Ionen ist es jedoch vorteilhaft, oberhalb Raumtemperatur in einem Temperaturbereich von 30-250 °C zu arbeiten, wobei ein dabei gegebenenfalls angewendeter Überdruck der Summe der Partialdrucke der Komponenten der Reaktionsmischung bei der jeweiligen Temperatur entspricht.

Die Wahl der stöchiometrischen Verhältnisse zwischen der eingesetzten Organopolysiloxan-Ammoniumverbindung und der Platin- und/oder Palladiumverbindung richtet sich verständlicherweise danach, ob eine Sättigung oder nur eine Teilbelegung des polymeren Feststoffes mit komplexen Pt- und/ oder Pd-Anionen erfolgen soll, was wiederum eine Beeinflussung der katalytischen Eigenschaften des schließlich erhaltenen Katalysators bedeutet. Soll eine Sättigung erreicht werden, so genügt im Prinzip eine Umsetzung von gemäß der Austauschgleichung stöchiometrischen Mengen der beiden Komponenten.

Im Hinblick auf eine raschere Durchführbarkeit des Austausches ist jedoch ein leichter Überschuß an dem Edelmetall-haltigen Reaktionspartner vorteilhaft. Im Fall eines gewünschten Teilaustausches ist mit auf den Teilaustausch bezogenen stöchiometrischen Mengen an Organopolysiloxan-Ammoniumverbindung und Pt- und/oder Pd-haltiger Ausgangsverbindung zu arbeiten.

Bei der Herstellung von Organopolysiloxan-Ammoniumverbindungen, die mehrere komplexe Anionen des Platins- und/oder Palladiums enthalten, kann eine gleichzeitige oder stufenweise Umsetzung der Pt- und/oder Pd-haltigen Ausgangsverbindungen mit der Organopolysiloxan-Ammoniumverbindung aus Einheiten der Formel (1), wobei $Y^{x-}$ für 1- bis 3-wertiges Anion einer anorganischen oder organischen Protonensäure steht, erfolgen, wobei der jeweils erhaltene metallhaltige Feststoff gegebenenfalls nach jeder Umsetzung in beliebiger Reihenfolge von der flüssigen Phase abgetrennt, gewaschen, getrocknet und gegebenenfalls getempert wird.

Bei beiden Varianten ist es angebracht, eine durch den gewünschten Austauschgrad und das

gewünschte Platin/Palladium-Verhältnis vorgegebene Stöchiometrie einzuhalten. Im Falle der gleichzeitigen Umsetzung schließen sich der Austauschreaktion die vorstehend beschriebenen Aufarbeitungsmaßnahmen an. Bei stufenweiser Umsetzung können bereits nach der ersten Austauschreaktion diese Aufarbeitungsschritte durchgeführt werden, rationeller ist es jedoch, die teilausgetauschte Organosiloxan-Ammoniumverbindung nur zu waschen und gleich anschließend den 2. Austauschschritt durchzuführen. Die Kombination der beiden Metalle Platin und Palladium in einer Organopolysiloxan-Ammoniumverbindung kann Vorteile hinsichtlich der Aktivität oder Selektivität bieten.

Bei einer Durchführung des Ionenaustausches nach dem genannten dynamischen Prinzip erfolgt die Umsetzung der polymeren Ausgangs-Ammoniumverbindung mit der zumindest teilweise gelösten Platin- und/oder Palladiumverbindung in wäßriger Suspension oder einem organischen Suspensionsmedium unter kräftiger Durchmischung der beiden Komponenten. Anschließend wird der Feststoff abgetrennt und gegebenenfalls nochmals mit frischer Lösung des Reaktionspartners gerührt. Dieser Vorgang wird so oft wiederholt, bis der Ionenaustausch in dem gewünschten Umfang vollzogen ist. Anschließend kann der Feststoff nach gängigen Techniken, wie Filtrieren, Zentrifugieren und/oder Dekantieren abgetrennt, salzfrei gewaschen und bei Raumtemperatur oder erhöhter Temperatur bis 250 °C, gegebenenfalls unter Verwendung von Vakuum getrocknet, bei einer Temperatur von 150-400 °C getempert, gemahlen sowie klassifiziert werden.

Arbeitet man nach dem dynamischen Prinzip, so setzt man die polymere Ausgangs-Ammoniumverbindung als Austauscherbett ein und bringt sie mit der Lösung des zumindest teilweise gelösten Platin- und/oder Palladium-haltigen Reaktionspartners in Kontakt.

Verwendet man als Austauscherbett eine Austauschersäule, so muß, um einen ausreichenden Durchfluß zu gewährleisten, das polymere Ausgangsprodukt eine bestimmte Mindestkorngröße besitzen. Im allgemeinen wird man bei Laborsäulen mit einer Mindestkorngröße von 0,2 mm auskommen. Nach vollzogenem Austausch wird auch hier salzfrei gewaschen und es können dann entweder Nachbehandlungsmaßnahmen oder weitere Aufarbeitungsschritte durchgeführt werden.

Die Nachbehandlung der gebildeten Platin- oder/und Palladium-haltigen Organopolysiloxan-Ammoniumverbindung mit Reduktionsmitteln kann direkt nach deren Herstellung in Suspension oder im Austauscherbett unter den genannten Bedingungen durchgeführt werden. Anschließend kann das Produkt direkt seiner Verwendung zugeführt werden, oder es wird nach gängigen Techniken, wie Filtrieren, Zentrifugieren und/oder Dekantieren von der flüssigen Phase abgetrennt, gewaschen und bei Raumtemperatur oder erhöhter Temperatur bis 250 °C, gegebenenfalls unter Verwendung von Vakuum getrocknet, gegebenenfalls bei einer Temperatur von 150-400 °C getempert, gemahlen sowie klassifiziert werden, wobei verschiedene Maßnahmen unterbleiben oder in einer anderen Reihenfolge durchgeführt werden konnen.

Ein weiteres Verfahren zur Herstellung Platin-haltiger Verbindungen nach Formel (1) geht aus von einer nach der DE-OS 31 20 214 hergestellten polymeren Organosiloxan-Aminverbindung, bestehend aus Einheiten der Formel

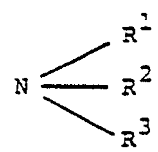

(3)

in der $R^1$, $R^2$ und $R^3$ denselben Bedeutungsumfang wie in Formel (1) haben und setzt diese mit stöchiometrischen, unterschüssigen oder überschüssigen Mengen von gegebenenfalls kristallwasserhaltigem

$H_2PtCl_6$ oder $H_2PtBr_6$

in Wasser oder einem organischen Lösungsmittel, insbesondere einem Alkohol mit 1-5 C-Atomen, nach dem statischen oder dynamischen Prinzip bei Raumtemperatur oder erhöhter Temperatur nach dem Schema einer Säure-Basenreaktion um, trennt von der flüssigen Phase ab, wäscht, trocknet gegebenenfalls, sowie mahlt, klassifiziert und tempert gegebenenfalls in beliebiger Reihenfolge.

Die Bedingungen bei diesem Herstellungsverfahren entsprechen denen des vorstehend beschriebenen Herstellungsverfahrens. Das gilt sowohl für den Ionenaustausch als auch für die sich anschließenden Verfahrensschritte.

Die auf den angegebenen Wegen erhaltenen erfindungsgemäßen Verbindungen mit Einheiten der Formel (1) können zur Modifizierung bei Gesamtdrucken von —100 bis 350 °C mit Reduktionsmitteln nachbehandelt werden. Temperaturen unterhalb Normaltemperatur finden z. B. bei Anwendung niedrigsiedender Reduktionsmittel (wie Borane) Verwendung. Dies kann entweder direkt nach der Einführung des komplexen Pt-Anions oder erst nach dem Waschen, Trocknen, Mahlen, Klassifizieren und Tempern des gebildeten Feststoffs geschehen.

Generell ist es auch möglich, die erfindungsgemäßen Platin- und/oder Palladium-haltigen Organopolysiloxan-Ammoniumverbindungen durch ein weiteres Verfahren herzustellen, das von den monomeren Vorstufen der noch metallfreien Organopolysiloxan-Ammoniumverbindungen ausgeht. Nach ihm erfolgt

die Einführung des komplexen Platin- oder Palladiumanions, d. h. also der Ionenaustausch, noch in homogener Phase durch Umsetzung der monomeren Ammoniumverbindungen, wie sie in der DE-OS 31 20 195 beschrieben sind, mit der Platin- oder Palladium-haltigen Ausgangsverbindung und anschließend wird erst die Polykondensation der bereits metallbeladenen Ammoniumverbindung durchgeführt. Dieses Verfahren hat jedoch den Nachteil, daß einerseits die Metalleinführung nicht so einfach durchführbar ist, da beide Reaktionskomponenten in der flüssigen Phase vorliegen, und andererseits nach der anschließenden Polykondensation das komplexe Metallanion nicht mehr frei beweglich und nicht mehr zugänglich ist. Diese Nachteile können bei den beiden vorstehend beschriebenen Verfahren nicht auftreten.

Von ihren physikalischen Eigenschaften her gesehen, verhalten sich die erfindungsgemäßen polymeren Platin- und Palladium-haltigen Organopolysiloxan-Ammoniumverbindungen wie spezielle Kieselsäuren oder Kieselgele und besitzen je nach Vorbehandlung spezifische Oberflächen von 0,1 bis 2 000 $m^2/g$ und Teilchengrößendurchmesser von ca. 1 cm bis ca. 1 μm. An der Luft sind sie bis über 200 °C stabil. Unter Schutzgasatmosphäre liegt die thermische Stabilität noch deutlich höher, teilweise bis über 400 °C.

Während die erfindungsgemäßen Platin-haltigen Organopolysiloxan-Ammoniumverbindungen wertvolle Katalysatoren für Hydrosilylierungen und Hydrierungen darstellen, sind die entsprechenden erfindungsgemäßen Palladium-haltigen Vertreter insbesondere auch als besonders aktive Hydrierkatalysatoren verwendbar. Hierzu können sie entweder in unmodifizierter Form oder aber erst nach einer in vorstehend beschriebener Weise durchgeführten reduktiven Behandlung eingesetzt werden.

Die Hydrosilylierung olefinischer und acetylenischer Verbindungen, d. h. die Anlagerung von Hydrogensilanen an ungesättigte Kohlenwasserstoffverbindungen kann unterhalb, bei oder oberhalb Raumtemperatur, bis zu einer Temperatur von 300 °C, bei Normaldruck oder einem Überdruck, welcher der Summe der Partialdrucke der einzelnen Komponenten der Reaktionsmischung entspricht, durchgeführt werden. Dabei können die erfindungsgemäßen Katalysatoren im Festbett oder in Suspension eingesetzt werden. Sie zeichnen sich durch hohe Aktivität und Selektivität und durch eine lange Standzeit aus. Aufgrund der hohen Selektivität können unter Einhaltung bestimmter Reaktionsbedingungen bevorzugt Verbindungen mit aktivierten Doppelbindungen, aber auch Verbindungen mit Dreifachbindungen hydrosilyliert werden.

Auf dem Hydriersektor können die erfindungsgemäßen Platin- und/oder Palladium-haltigen Organopolysiloxane prinzipiell dort eingesetzt werden, wo auch analoge Metallverbindungen bzw. Metalle in homogener oder heterogener Phase eingesetzt werden, also z. B. zur Hydrierung von Kohlenstoffmehrfachbindungen, Carbonylen oder Nitroverbindungen, zur hydrierenden Enthalogenierung oder zur Hydrierung von molekularem Sauerstoff, wobei unter Wahl geeigneter Reaktionsbedingungen wiederum eine hohe Selektivität erzielt werden kann.

Generell können diese Hydrierungen bei Raumtemperatur oder erhöhter Temperatur, bei Unterdruck, Atmosphärendruck oder Überatmosphärendruck durchgeführt werden. Aufgrund der praktisch molekularen Dispersität entwickeln diese neuen Hydrierkatalysatoren eine sehr hohe Aktivität, sie können am Ende des Katalyseprozesses leicht von den übrigen Bestandteilen der Reaktionsmischung abgetrennt und dann erneut eingesetzt werden.

Die Erfindung wird nachfolgend anhand von Ausführungsbeispielen unter Berücksichtigung der grundsätzlich wichtigsten Ausgangsstoffe näher erläutert.

Beispiel 1

25 g einer polymeren Organosiloxan-Ammoniumverbindung, bestehend aus Einheiten der Formel

$$\left[(H_3C)N(CH_2CH_2CH_2SiO_{3/2})_3\right]^+Cl^-$$

mit einer Korngröße von 0,05-0,2 mm wurden in 50 ml entsalztem Wasser aufgeschlämmt. Diese Suspension wurde in 3 Chargen zu je 200 ml mit insgesamt 600 ml einer wäßrigen Lösung, die insgesamt 16,55 g $K_2PtCl_4$ (39,9 mMol Pt) enthielt, umgesetzt. Der Feststoff wurde mit jeder Charge 3 Stunden bei 60 °C in einem Becherglas mit einem KPG-Rührer gerührt, dann von der flüssigen Phase abfiltriert, drei mal mit je 300 ml entsalztem $H_2O$ gewaschen und dann zunächst 5 Stunden bei 90 °C vorgetrocknet. Anschließend wurde das braune Produkt 12 Stunden bei 150 °C/80 mbar feingetrocknet.

Bei einem vollständigen Beladen der polymeren Ammoniumverbindung mit $PtCl_4^{2-}$-Einheiten war der Erhalt von 34,6 g an polymerem Produkt, angenähert bestehend aus Einheiten der Formel

$$\left[(H_3C)N(CH_2CH_2CH_2SiO_{3/2})_3\right]_2^{2+}PtCl_4^{2-}$$

mit einem Pt-Gehalt von 20,32 Gew.-% zu erwarten. Ausgewogen werden konnten 34,0 g mit einem Pt-Gehalt von 18,55 Gew.-%, d. h. daß der Ionenaustauscher mit über 91 % seiner theoretischen Kapazität

mit Platin gesättigt wurde.

Beispiel 2

30 g einer Organopolysiloxan-Ammoniumverbindung, bestehend aus Einheiten der Formel

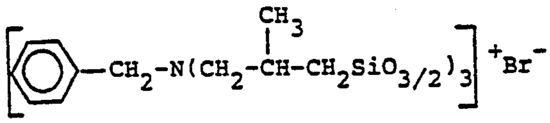

mit einer Korngröße von 0,05-0,4 mm wurden analog Beispiel 1 in 2 Chargen mit 8,11 g $(NH_4)_2PtBr_4$, gelöst in 500 ml entsalztem Wasser, umgesetzt. Nach der Trocknung wurden 35,1 g Feststoff mit einem Pt-Gehalt von 8,10 Gew.-% erhalten. Dies entspricht einer angenähert 50 %igen Sättigung des Ionenaustauschers mit $PtBr_4^{2-}$-Einheiten.

Beispiel 3

30 g einer Organopolysiloxan-Ammoniumverbindung, bestehend aus Einheiten der Formel

$$\{(H_3C)_2CH-CH_2-N[(CH_2)_8SiO_{3/2}]_3\}_2^{2+}SO_4^{2-}$$

mit einer Korngröße von 0,05-0,1 mm, wurden analog Beispiel 1 auf einmal mit 1,12 g $Na_2PtCl_6$, gelöst in 300 ml entsalztem Wasser, umgesetzt. Nach der Trocknung wurden 30,7 g Feststoff mit einem Pt-Gehalt von 1,52 Gew.-% erhalten. Dies entspricht einer angenähert 10 %igen Sättigung des ursprünglich in der $SO_4^{2-}$-Form vorliegenden Ionenaustauschers.

Beispiel 4

40 g einer Organopolysiloxan-Ammoniumverbindung, bestehend aus Einheiten der Formel

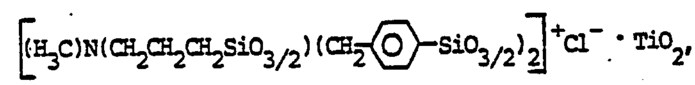

mit einer Korngröße von 0,4-0,6 mm, wurden in 200 ml entsalztes Wasser eingeschlämmt und nach 1 Stunde in eine Ionenaustauschersäule mit einem Innendurchmesser von 23 mm überführt. Anschließend wurde die Säule bei Raumtemperatur in 5 Chargen mit insgesamt 500 ml einer wäßrigen Lösung mit einem Gesamtgehalt an 31,7 g $K_2PtCl_4$ innerhalb von 3 Stunden beschickt. Dann wurde der Säuleninhalt mit insgesamt 1 l entsalztem Wasser gewaschen, in eine Schale überführt und 24 Stunden bei 120 °C/80 mbar getrocknet. Bei einer vollständigen Überführung obiger Polymereinheiten in Einheiten der Formel

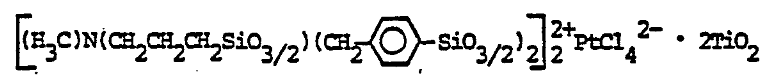

war ein Pt-Gehalt des erhaltenen Feststoffs von 14,87 Gew.-% zu erwarten. Erhalten werden konnten 50,1 g Feststoff mit einem Pt-Gehalt von 14,7 Gew.-%.

Beispiel 5

25 g einer Organopolysiloxan-Ammoniumverbindung, bestehend aus Einheiten der Formel

$$[(H_3C)N(CH_2CH_2CH_2SiO_{3/2})_3]^+Cl^- \cdot (C_2H_5)_2SiO$$

mit einer Korngröße von 0,05-0,2 mm wurden analog Beispiel 1 in 2 Chargen mit insgesamt 4,10 g $Na_2PdCl_4$, gelöst in 400 ml entsalztem Wasser, behandelt, anschließend abfiltriert, gewaschen und getrocknet. Es konnten 27,3 g einer Organopolysiloxan-Ammoniumverbindung erhalten werden, in der angenähert die Hälfte aller Chlorid-Ionen der Ausgangsverbindung gegen $PdCl_4^{2-}$-Ionen ausgetauscht waren. Pd-Gehalt : 5,4 Gew.-% (Theorie : 5,39 Gew.-%).

Beispiel 6

20 g einer Organopolysiloxan-Ammoniumverbindung, bestehend aus Einheiten der Formel

$$\left[(H_3C)N(CH_2CH_2CH_2SiO_{3/2})_3\right]^{+}J^{-} \cdot 0{,}1AlO_{3/2}$$

mit einer Korngröße von 0,05-0,1 mm wurden analog Beispiel 1 in 3 Chargen mit insgesamt 13,4 g $K_2PdCl_6$, gelöst in 400 ml entsalztem Wasser, behandelt, anschließend abfiltriert, gewaschen und getrocknet. Es konnten 21,4 g einer Organopolysiloxan-Ammoniumverbindung erhalten werden, die erwartungsgemäß dem Pd-Gehalt von 10,85 Gew.-% zufolge in etwa vollständig mit $PdCl_6^{2-}$-Ionen gesattigt war. (Theoretischer Pd-Gehalt bei vollständiger Sättigung 11,17 Gew.-%.).

Beispiel 7

30 g einer Organopolysiloxan-Ammoniumverbindung, bestehend aus Einheiten der Formel

$$\left[N(CH_2CH_2CH_2SiO_{3/2})_4\right]^{+}Cl^{-}$$

mit einer Korngröße von 0,05-0,1 mm wurden analog Beispiel 1 in 2 Chargen mit insgesamt 2,92 g $K_2PtCl_4$, gelöst in 100 ml entsalztem Wasser, behandelt, anschließend abfiltriert, gewaschen und getrocknet. Erhalten wurden 31,7 g einer Organopolysiloxan-Ammoniumverbindung, in der angenähert ein Fünftel aller Chlorid-Ionen der Ausgangsverbindung gegen $PtCl_4^{2-}$-Ionen ausgetauscht waren. Pt-Gehalt : 4,25 Gew.-%. (Theorie : 4,31 Gew.-%).

Beispiel 8

30 g einer Organopolysiloxan-Aminverbindung, bestehend aus Einheiten der Formel

$$N(CH_2CH_2CH_2SiO_{3/2})_3 \cdot SiO_2$$

mit einer Korngröße von 0,05-0,1 mm wurden analog Beispiel 1 in 3 Chargen mit insgesamt 7,55 g $H_2PtCl_6$, gelöst in 300 ml Ethanol, bei Rückflußtemperatur behandelt, dann abfiltriert, anschließend mit 500 ml Ethanol gewaschen und dann 15 Stunden bei 80 °C/80 mbar getrocknet. Erhalten wurden 37,3 g einer Organopolysiloxan-Verbindung, in der angenähert die Hälfte aller Amineinheiten der Ausgangsverbindung jetzt als Einheiten der Formel

$$\left[HN(CH_2CH_2CH_2SiO_{3/2})_3\right]_2^{2+}PtCl_6^{2-} \cdot 2SiO_2$$

vorlagen Pt-Gehalt : 9,30 Gew.-% (Theorie : 9,57 Gew.-%).

Beispiel 9

25 g einer Organopolysiloxan-Ammoniumverbindung, bestehend aus Einheiten der Formel

$$\left[(H_3C)N(CH_2CH_2CH_2SiO_{3/2})_3\right]^{+}OH^{-}$$

mit einer Korngröße von 0,4-0,6 mm, wurden analog Beispiel 4 in 200 ml Isopropanol in eine Ionenaustauschersäule überführt. Anschließend wurde die Säule in 5 Chargen mit insgesamt 18,7 g $H_2PtCl_6$, gelöst in 500 ml Isopropanol, innerhalb von 3 Stunden beschickt. Dann wurde das Produkt mit 500 ml Isopropanol gewaschen und 24 Stunden bei 120 °C/80 mbar getrocknet. Erhalten wurden 38,3 g einer Organopolysiloxan-Ammoniumverbindung, in der nahezu alle $OH^-$-Ionen gegen $PtCl_6^2$ ausgetauscht waren. Pt-Gehalt : 18,0 Gew.-% (Theorie : 18,9 Gew.-%).

Beispiel 10

30 g einer Organopolysiloxan-Ammoniumverbindung, bestehend aus Einheiten der Formel

$$\left[(H_3C)N(CH_2CH_2CH_2SiO_{3/2})_3\right]^{+}Cl^{-}$$

mit einer Korngröße von 0,05-0,1 mm, wurden analog Beispiel 1 in 3 Chargen mit insgesamt 4,49 g $K_2PtCl_4$ und 3,18 g $Na_2PdCl_4$, zusammen gelöst in 300 ml entsalztem Wasser, behandelt, anschließend abfiltriert, gewaschen und getrocknet. Erhalten wurden 34,5 g (Theorie : 34,79 g) einer Organopolysiloxan-Ammoniumverbindung, in der angenähert die Hälfte aller Chlorid-Ionen der Ausgangsverbindung gegen $PtCl_4^{2-}$- und $PdCl_4^{2-}$-Ionen ausgetauscht waren Pt-Gehalt : 5,82 Gew.-% (Theorie : 6,06 Gew.-%), Pd-Gehalt : 3,17 Gew.-% (Theorie : 3,31 Gew.-%)

Beispiel 11

6,0 g der nach Beispiel 1 hergestellten Platin-haltigen Organopolysiloxan-Ammoniumverbindung, bestehend im wesentlichen aus Einheiten der Formel

$$\left[(H_3C)N(CH_2CH_2CH_2SiO_{3/2})_3\right]_2^{2+}PtCl_4^{2-}$$

mit einem Pt-Gehalt von 18,55 Gew.-% und einer Korngröße von 0,05-0,2 mm wurden in 100 ml Ethanol suspendiert. Die auf Rückflußtemperatur aufgeheizte braun-schwarze Suspension wurde dann unter kräftigem Rühren binnen 1 Stunde mit einer Lösung von 1,0 g $NaBH_4$ in 100 ml Ethanol versetzt. Die Suspension wurde noch 2 Stunden unter Rückfluß gerührt, anschließend der Feststoff abfiltriert und in eine Extraktionshülse überführt. Nach 5-stündiger Extraktion mit einem Ethanol/Wasser-Gemisch von 1 : 1 wurde das grau-schwarze Produkt in einen Kolben überführt, 15 Stunden bei 120 °C/80 mbar getrocknet und dann unter Stickstoff gehandhabt und aufbewahrt. Auswaage Produkt : 5,8 g, Pt-Gehalt : 18,8 Gew.-%.

Beispiel 12

10 g einer analog Beispiel 5 hergestellten Palladium-haltigen Organopolysiloxan-Ammoniumverbindung, bestehend aus Einheiten der Formel

$$\left[(H_3C)N(CH_2CH_2CH_2SiO_{3/2})_3\right]_2^{2+}PdCl_4^{2-} \cdot 2SiO_2$$

mit einem Pd-Gehalt von 10,7 Gew.-% wurden analog Beispiel 11 mit 10 ml 37 %iger Formaldehydlösung behandelt. Nach 15-stündiger Trocknung bei 120 °C/80 mbar wurden 9,3 g Produkt mit einem Pd-Gehalt von 11,2 Gew.-% erhalten.

Beispiel 13

10 g der in Beispiel 10 hergestellten Platin- und Palladium-haltigen Organopolysiloxan-Ammoniumverbindung wurden in 100 ml Methanol suspendiert. Die Suspension wurde in einen 500 ml Hubautoklaven überführt und dort 2 Stunden bei einem $H_2$-Druck von 50 bar und einer Temperatur von 120 °C belassen. Anschließend wurde der Autoklav entspannt, das Produkt mit insgesamt 100 ml Methanol gewaschen, 8 Stunden bei 100 °C/80 mbar getrocknet und unter Stickstoff aufbewahrt. Auswaage : 9,5 g, Pt-Gehalt : 5,6 Gew.-%, Pd-Gehalt : 3,02 Gew.-%.

Beispiel 14

30 ml Toluol, 22,35 g (300 mMol) Propargylchlorid und 42,7 g (315 mMol) Trichlorsilan und 0,59 g der nach Beispiel 1 hergestellten Platin-haltigen Organopolysiloxan-Ammoniumverbindung wurden in einem 100 ml Dreihalskolben, der mit einem Rührstab magnetisch gerührt wurde, vereinigt.

Die Mischung wurde auf Rückflußtemperatur, die zunächst 50 °C betrug, aufgeheizt. Nachdem die Rückflußtemperatur innerhalb von 6 Stunden von 50 °C bis auf 118 °C angestiegen war, wurde abgekühlt und die Lösung NMR-spektroskopisch und gaschromatographisch untersucht. Dabei zeigte sich, daß die Ausgangsverbindung vollständig verschwunden war und sich in über 95 %iger Selektivität die Verbindung $SiCl_3—CH{=}CH—CH_2Cl$, was durch gaschromatographische und NMR-Vergleichsuntersuchungen bestätigt wurde, gebildet hatte.

Unter den gewählten Bedingungen wurde durch die hohe Selektivität des verwendeten Katalysators fast ausschließlich nur die Dreifachbindung hydrosilyliert, während die gebildete Doppelbindung nicht angegriffen wurde. Bei entsprechenden Vergleichsexperimenten mit einem herkömmlichen Pt/C-Hydrosi-

lylierungskatalysator und mit $H_2PtCl_6$ wurde kein vergleichbares Ergebnis erzielt, sondern in diesen Fällen wurde sowohl die Dreifach- als auch die Doppelbindung hydrosilyliert.

Beispiel 15

4,36 ml Acrylsäureethylester, 20 ml Toluol und 40 mg des nach Beispiel 13 hergestellten Katalysators wurden in einem 50 ml Kolben vereinigt. Dieser Kolben wurde an eine Hydrierapparatur angeschlossen. Unter magnetischer Rührung, bei einer Temperatur von 80 °C und bei einem absoluten $H_2$-Druck von ungefähr 1 bar wurde der Acrylsäureethylester innerhalb von 50 Min., nachdem ein Verbrauch von 970 ml $H_2$ abgelesen wurde, vollständig zu Propionsäureethylester hydriert, ohne daß z. B. Toluol hydriert oder die Estergruppe reduziert wurde.

Beispiel 16

4,36 ml Acrylsäureethylester, 3 ml Hexen-1,20 ml Toluol und 40 mg des nach Beispiel 1 hergestellten Pt-haltigen Katalysators wurden analog Beispiel 15 mit Wasserstoff umgesetzt. Innerhalb von 90 Min. wurde der Acrylsäureethylester zu Propionsäureethylester umgesetzt, ohne daß das anwesende Hexen-1 in feststellbarem Umfang zu Hexan hydriert wurde.

In diesem Fall besaß der verwendete Katalysator zwar eine geringere Aktivität als der im Beispiel 15 verwendete, dafür war eine hohe Selektivität für aktivierte Doppelbindungen deutlich erkennbar.

Beispiel 17

Eine analog Beispiel 16 durchgeführte Hydrierung mit einer äquivalenten Menge des nach Beispiel 5 hergestellten Pd-Katalysators ergab ebenfalls eine vollständige Hydrierung des Acrylsäureethylesters zu Propionsäureethylester, wobei das ebenfalls anwesende Hexen-1 zu über 90 % nicht hydriert wurde.

**Patentansprüche**

1. Platin- und/oder Palladium-haltige polymere Organosiloxan-Ammoniumverbindungen dadurch gekennzeichnet, daß sie aus Einheiten der allgemeinen Formel

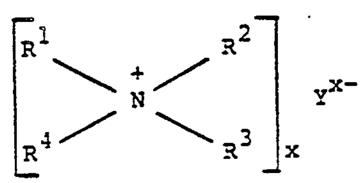 (1)

aufgebaut sind, in der $R^1$, $R^2$ und $R^3$ für eine Gruppe der allgemeinen Formel (2) stehen,

$$R^5\text{—}SiO_{3/2} \qquad (2)$$

in der $R^5$ wiederum für eine lineare oder verzweigte Alkylengruppe mit 1 bis 12 C-Atomen, eine Cycloalkylengruppe mit 5, 7 oder 8 C-Atomen oder für Einheiten

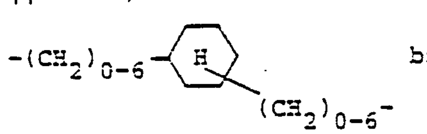 bzw. 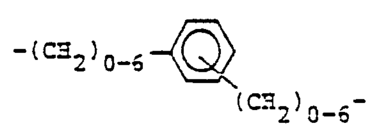

steht, wobei $R^1$, $R^2$ und $R^3$ gleich oder verschieden sein können, und die freien Valenzen der Sauerstoffatome entweder durch Siliciumatome weiterer Gruppen der Formel (2) und/oder durch vernetzende Brückenglieder der Formeln

$SiO_{4/2}$ oder $SiR'O_{3/2}$ oder $SiR'_2O_{2/2}$ bzw.
$TiO_{4/2}$ oder $TiR'O_{3/2}$ oder $TiR'_2O_{2/2}$ bzw.
$AlO_{3/2}$ oder $AlR'O_{2/2}$

abgesättigt sind, wobei R' für eine Methyl- oder Ethylgruppe steht und das Verhältnis zwischen den Siliciumatomen in (2) zu den Brückenatomen Silicium, Titan und Aluminium von 1 : 0 bis 1 : 10 betragen kann, $R^4$ denselben Bedeutungsumfang haben kann wie $R^1$, $R^2$ und $R^3$ oder für Wasserstoff, eine 1 bis 10 C-Atome enthaltende lineare oder verzweigte Alkylgruppe, eine 5 bis 8 C-Atome enthaltende Cycloalkyl- oder die Benzylgruppe steht, $Y^{x-}$ für

$$PtCl_4^{2-},\ PtCl_6^{2-},$$

$PtBr_4^{2-}$, $PtBr_6^{2-}$
$PdCl_4^{2-}$, $PdCl_6^{2-}$,
$PdBr_4^{2-}$, $PdBr_6^{2-}$

und gegebenenfalls für ein anorganisches oder organisches, 1- bis 3-wertiges Anion einer anorganischen oder organischen Protonensäure, die mit Aminbasen stabile Salze zu bilden imstande ist, oder die Hydroxylgruppe steht und

x eine Zahl von 1 bis 3 bedeutet.

2. Polymere Organosiloxan-Ammoniumverbindungen nach Anspruch 1, dadurch gekennzeichnet, daß mehrere komplexe Anionen des Platins und/oder Palladiums nebeneinander im Polymersystem vorliegen.

3. Polymere Organosiloxan-Ammoniumverbindungen nach Ansprüchen 1 und 2, dadurch gekennzeichnet, daß das molare Verhältnis zwischen den Platin und/oder Palladium-haltigen Anionen zu den übrigen anorganischen oder organischen, 1- bis 3-wertigen Anionen 1 : 0 bis 1 : 100 beträgt.

4. Polymere Organosiloxan-Ammoniumverbindungen nach Ansprüchen 1 bis 3, dadurch gekennzeichnet, daß $R^1$, $R^2$ und $R^3$ miteinander identisch sind und $R^4$ gleich Methyl ist.

5. Polymere Organosiloxan-Ammoniumverbindungen nach Ansprüchen 1 bis 4, aufgebaut aus Polymereinheiten der Formel

$$\left[(H_3C)N(CH_2CH_2CH_2SiO_{3/2})_3\right]_x^+ \quad Y^{x-}$$

6. Mit Reduktionsmitteln bei Gesamtdrucken von 1 bis 300 bar und Temperaturen von —100 bis 350 °C nachbehandelte Platin- und/oder Palladium-haltige polymere Organosiloxan-Ammoniumverbindungen nach Ansprüchen 1 bis 5.

7. Verfahren zur Herstellung von Platin- und/oder Palladium-haltigen polymeren Organosiloxan-Ammoniumverbindungen nach Ansprüchen 1 bis 5, dadurch gekennzeichnet, daß man eine Organopolysiloxan-Ammoniumverbindung, bestehend aus Einheiten der Formel (1), wobei $Y^{x-}$ für 1- bis 3-wertiges Anion einer anorganischen oder organischen Protonensäure steht, mit stöchiometrischen, unterschüssigen oder überschüssigen Mengen von gegebenenfalls kristallwasserhaltigen Ausgangsverbindungen des Platins und/oder Palladiums aus der Gruppe

$M_2PtCl_4$, $M_2PtCl_6$
$M_2PtBr_4$, $M_2PtBr_6$
$M_2PdCl_4$, $M_2PdCl_6$
$M_2PdBr_4$, $M_2PdBr_6$,

wobei M für Lithium, Natrium, Kalium, Ammonium oder Wasserstoff steht, in Wasser oder einem polaren organischen Lösungsmittel, das die Pt- oder Pd-Verbindung wenigstens teilweise zu lösen imstande ist, zum gegenseitigen teilweisen oder vollständigen Austausch der Anionen nach dem statischen oder dynamischen Prinzip umsetzt, den metallhaltigen Feststoff anschließend wäscht, gegebenenfalls von der flüssigen Phase abtrennt und ihn gegebenenfalls trocknet sowie mahlt, klassifiziert und gegebenenfalls über einen Zeitraum von 1 Stunde bis zu 4 Tagen bei Temperaturen von 150 bis 400 °C, gegebenenfalls unter Verwendung von Vakuum tempert.

8. Verfahren nach Anspruch 7 zur Herstellung der gemischten Verbindungen nach Ansprüchen 2 und 3, dadurch gekennzeichnet, daß eine Organopolysiloxan-Ammoniumverbindung, bestehend aus Einheiten der Formel (1), wobei $Y^{x-}$ für ein 1- bis 3-wertiges Anion einer anorganischen oder organischen Protonensäure steht, gleichzeitig oder nacheinander mit verschiedenen, zumindest teilweise gelösten Ausgangsverbindungen des Platins und/oder Palladiums umsetzt, wobei der metallhaltige Feststoff gegebenenfalls nach jeder Umsetzung in beliebiger Reihenfolge von der flüssigen Phase abgetrennt, gewaschen, getrocknet und gegebenenfalls getempert wird.

9. Verfahren zur Herstellung von Platin-haltigen polymeren Organosiloxan-Ammoniumverbindungen nach Ansprüchen 1 bis 3, dadurch gekennzeichnet, daß eine polymere Organosiloxan-Aminverbindung, bestehend aus Einheiten der Formel

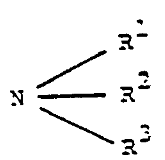

(3)

in der $R^1$, $R^2$ und $R^3$ denselben Bedeutungsumfang wie in Anspruch 1 haben, mit stöchiometrischen, unterschüssigen oder überschüssigen Mengen von gegebenenfalls kristallwasserhaltigem

$H_2PtCl_6$ oder $H_2PtBr_6$

in Wasser oder einem niederen Alkohol mit 1-5 C-Atomen nach dem statischen oder dynamischen Prinzip bei Raumtemperatur oder erhöhter Temperatur umgesetzt und dann weiter nach Anspruch 7 aufgearbeitet wird.

10. Verfahren zur Modifizierung der nach den Ansprüchen 7 bis 9 erhältlichen Platin- und/oder Palladium-haltigen polymeren Organosiloxan-Ammoniumverbindungen, dadurch gekennzeichnet, daß sie bei Gesamtdrucken von 1 bis 300 bar und Temperaturen von — 100 bis 350 °C mit Reduktionsmitteln nachbehandelt werden.

11. Verwendung der Platin- und/oder Palladium-haltigen polymeren Organosiloxan-Ammoniumverbindungen nach vorstehenden Ansprüchen als Katalysatoren für Hydrosilylierungs- und Hydrierungsreaktionen.

**Claims**

1. Platinum-containing and/or palladium-containing polymeric organosiloxane ammonium compounds, characterised in that they are made up of units corresponding to the general formula

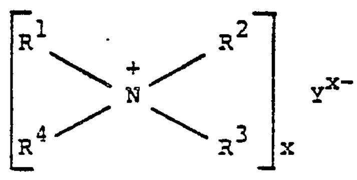

in which $R^1$, $R^2$ and $R^3$ represent a group corresponding to general formula (2)

$$R^5{-}SiO_{3/2} \qquad (2)$$

in which $R^5$ represents a linear or branched alkylene group containing from 1 to 12 carbon atoms, a cycloalkylene group containing 5, 7 or 8 carbon atoms or units

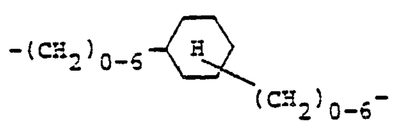 bzw. 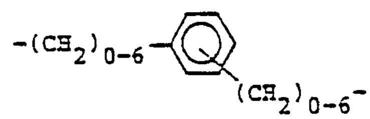

wherein $R^1$, $R^2$ and $R^3$ can be the same or different and the free valencies of the oxygen atoms are saturated either by silicon atoms of further groups corresponding to formula (2) and/or by cross-linking bridge members corresponding to formulae

$SiO_{4/2}$ or $SiR'O_{3/2}$ or $SiR'_{2/2}$ and
$TiO_{4/2}$ or $TiR'O_{3/2}$ or $TiR'O_{2/2}$ and
$AlO_{3/2}$ or $AlR'O_{2/2}$

wherein R' represents a methyl or ethyl group and the ratio between the silicon atoms in (2) to the bridge atoms silicon, titanium and aluminium can be 1 : 0 to 1 : 10, $R^4$ can have the same meanings as $R^1$, $R^2$ and $R^3$ or represents hydrogen a linear or branched alkyl group containing from 1 to 10 carbon atoms a cycloalkyl group containing from 5 to 8 carbon atoms or the benzyl group, $Y^{x-}$ represents

$PtCl_4^{2-}$, $PtCl_6^{2-}$,
$PtBr_4^{2-}$, $PtBr_6^{2-}$,
$PdCl_4^{2-}$, $PdCl_6^{2-}$,
$PdBr_4^{2-}$, $PdBr_6^{2-}$

and optionally represents an inorganic or organic monovalent or trivalent anion of an inorganic or organic proton acid capable of forming stable salts with amine bases, or the hydroxyl group and

x is a number from 1 to 3.

2. Polymeric organosiloxane ammonium compounds according to claim 1, characterised in that several complex anions of platinum and/or palladium are present next to one another in the polymer system.

3. Polymeric organosiloxane ammonium compounds according to claims 1 and 2, characterised in

that the molar ratio between the platinum-containing anions and/or palladium-containing anions and the other inorganic or organic monovalent to trivalent anions is from 1 : 0 to 1 : 100.

4. Polymeric organosiloxane ammonium compounds according to claims 1 to 3 characterised in that $R^1$, $R^2$ and $R^3$ are identical to one another and $R^4$ represents methyl.

5. Polymeric organosiloxane ammonium compounds according to claims 1 to 4 made up of polymer units corresponding to the formula

$$\left[(H_3C)N(CH_2CH_2CH_2SiO_{3/2})_3\right]^+_x \; Y^{x-}$$

6. Platinum-containing and/or palladium-containing polymeric organosiloxane ammonium compounds according to claims 1 to 5 which are after-treated using reducing agents at total pressures of from 1 to 300 bar and at temperatures of from —100 to 350 °C.

7. A process for the production of platinum-containing and/or palladium-containing polymeric organosiloxane ammonium compounds according to claims 1 to 5 characterised in that an organopolysiloxane ammonium compound composed of units corresponding to formula (1) wherein $Y^{x-}$ represents monovalent to trivalent anion of an inorganic or organic proton acid is reacted with stoichiometric or more than or less than stoichiometric quantities of starting compounds of platinum and/or palladium optionally containing water of crystallisation from the group comprising

$$M_2PtCl_4,\; M_2PtCl_6$$
$$M_2PtBr_4,\; M_2PtBr_6$$
$$M_2PdCl_4,\; M_2PdCl_6$$
$$M_2PdBr_4,\; M_2PdBr_6,$$

wherein M represents lithium, sodium, potassium ammonium or hydrogen in water or a polar organic solvent capable of dissolving the Pt- or Pd- compound at least in part for reciprocal partial or complete exchange of the anions by the static or dynamic principle the metal-containing solids material is then washed optionally separated from the liquid phase and is optionally dried and ground, classified and optionally tempered for a period of from one hour to four days at temperatures of from 150 to 400 °C optionally while applying a vacuum.

8. A process according to claim 7 for the production of the mixed compounds according to claims 2 and 3, characterised in that an organopolysiloxane ammonium compound composed of units corresponding to formula (1) wherein $Y^{x-}$ represents a monovalent to trivalent anion of an inorganic or organic proton acid, is reacted simultaneously or in succession with various starting compounds of platinum and/or palladium which are at least partially dissolved, the metal-containing solids material optionally being separated from the liquid phase after each reaction in an optional sequence being washed dried and optionally tempered.

9. A process for the production of platinum-containing polymeric organosiloxane ammonium compounds according to claims 1 to 3 characterised in that a polymeric organosiloxane amine compound composed of units corresponding to the formula

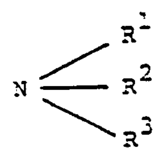

(3)

in which $R^1$, $R^2$ and $R^3$ have the same meanings as in claim 1, is reacted with stoichiometric, or more than or less than stoichiometric quantities of

$$H_2PtCl_6 \text{ or } H_2PtBr_6$$

optionally containing water of crystallisation in water or in a lower alcohol containing from 1 to 5 carbon atoms by the static or dynamic principle at room temperature or at elevated temperature and is then further worked up according to claim 7.

10. A process for modifying the platinum-containing and/or palladium-containing polymeric organosiloxane ammonium compounds obtainable according to claims 7 to 9, characterised in that they are after-treated with reducing agents at total pressures of from 1 to 300 bar and at temperatures of from —100 to 350 °C.

11. Use of the platinum-containing and/or palladium-containing polymeric organosiloxane ammonium compounds according to the preceding claims as catalysts for hydrosilylation and hydrogenation reactions.

**Revendications**

1. Composés polymères de type organosiloxane-ammonium contenant du platine, et/ou du palladium, caractérisés en ce qu'ils sont obtenus par synthèse à partir d'unités de formule générale :

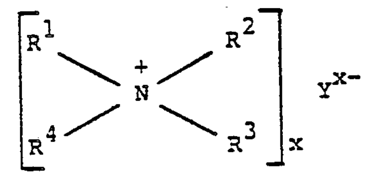

(1)

dans laquelle $R^1$, $R^2$ et $R^3$ représentent chacun un groupe de formule générale (2) :

$$R^5—SiO_{3/2} \quad (2)$$

dans laquelle $R^5$ représente, à son tour, un groupe alkylène linéaire ou ramifié ayant 1 à 12 atomes de carbone, un groupe cyclo-alkylène contenant 5, 7 ou 8 atomes de carbone, ou les unités :

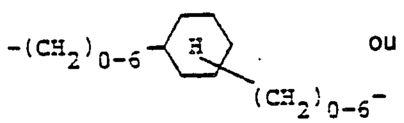

ou bien

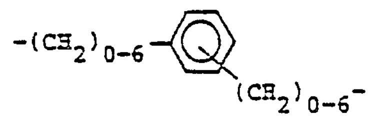

$R^1$, $R^2$ et $R^3$ pouvant être identiques ou différents, et dont les valences libres des atomes d'oxygène sont saturées ou bien par des atomes de silicium d'autres groupes de formule (2), et/ou bien par des chaînons de pontage réticulés de formules :

$SiO_{4/2}$ ou $SiR'O_{3/2}$ ou $SiR'_2O_{2/2}$ ou bien
$TiO_{4/2}$ ou $TiR'O_{3/2}$ ou $TiR'_2O_{2/2}$ ou bien
$AlO_{3/2}$ ou $AlR'O_{2/2}$

R' représentant un groupe méthyle ou éthyle, et le rapport entre les atomes de silicium dans la formule (2) et les atomes de pontage de silicium, de titane et d'aluminium pouvant aller de 1 : 0 à 1 : 10,

$R^4$ peut avoir la même signification que $R^1$, $R^2$ et $R^3$ ou représenter un atome d'hydrogène, un groupe alkyle linéaire ou ramifié contenant 1 à 10 atomes de carbone, un groupe cyclo-alkyle contenant 5 à 8 atomes de carbone, ou le groupe benzyle, $Y^{x-}$ représente

$PtCl_4^{2-}$, $PtCl_6^{2-}$,
$PtBr_4^{2-}$, $PtBr_6^{2-}$
$PdCl_4^{2-}$, $PdCl_6^{2-}$,
$PdBr_4^{2-}$, $PdBr_6^{2-}$

et éventuellement un anion inorganique ou organique mono- à trivalent d'un acide protonique organique ou minéral qui est capable de former des sels stables avec des bases aminées, ou représente le groupe hydroxyle et

x est un nombre allant de 1 à 3.

2. Composés polymères de type organosiloxane-ammonium selon la revendication 1, caractérisés en ce que plusieurs anions complexes du platine et/ou du palladium sont présents simultanément dans le système polymère.

3. Composés polymères de type organosiloxane-ammonium selon les revendications 1 et 2, caractérisés en ce que le rapport molaire entre les anions contenant du platine et/ou du palladium et les anions mono- à trivalents inorganiques ou organiques restants est de 1 : 0 à 1 : 100.

4. Composés polymères de type organosiloxane-ammonium selon les revendications 1 à 3, caractérisés en ce que $R^1$, $R^2$ et $R^3$ sont identiques et que $R^4$ est un groupe méthyle.

5. Composés polymères de type organosiloxane-ammonium selon les revendications 1 à 4, obtenus par synthèse à partir d'unités polymères de formule :

$$\left[(H_3C)N(CH_2CH_2CH_2SiO_{3/2})_3\right]_x^+ \quad Y^{x-}$$

6. Composés polymères de type organosiloxane-ammonium contenant du platine et/ou du palladium selon les revendications 1 à 5, caractérisés en ce qu'ils sont soumis à un post-traitement avec des

réducteurs à des pressions totales de 1 à 300 bars et à des températures de — 100 à 350 °C.

7. Procédé pour la préparation de composés polymères de type organosiloxane-ammonium contenant du platine et/ou du palladium selon les revendications 1 à 5, caractérisés en ce que l'on fait réagir un composé de type organopolysiloxane-ammonium, constitué d'unités de formule (1), $Y^{x-}$ représentant un anion mono- à trivalent d'un acide protonique organique ou minéral, avec des quantités stœchiométriques, plus faibles ou en excès de composés de départ à base de platine et/ou de palladium, éventuellement hydratés, choisis parmi :

$M_2PtCl_4$, $M_2PtCl_6$
$M_2PtBr_4$, $M_2PtBr_6$
$M_2PdCl_4$, $M_2PdCl_6$
$M_2PdBr_4$, $M_2PdBr_6$,

M représentant le lithium, le sodium, le potassium, l'ammonium ou l'hydrogène, dans de l'eau ou dans un solvant organique polaire qui est capable de dissoudre, au moins en partie, le composé de Pt ou de Pd, pour l'échange réciproque partiel ou total des anions selon le principe statique ou dynamique, puis on lave la matière solide métallifère, on la sépare éventuellement de la phase liquide et, éventuellement, on la sèche et on la broie, on la classe et éventuellement on l'étuve pendant une durée de 1 heure à 4 jours à des températures de 150 à 400 °C, éventuellement avec utilisation de vide.

8. Procédé selon la revendication 7 pour la préparation des composés mixtes selon les revendications 2 et 3, caractérisé en ce que l'on fait réagir un composé de type organopolysiloxane-ammonium, constitué d'unités de formule (1), $Y^{x-}$ représentant un anion mono- à trivalent d'un acide protonique organique ou minéral, avec simultanément ou l'un après l'autre, divers composés de départ à base de platine et/ou de palladium, dissous au moins en partie, la matière solide métallique étant éventuellement, après chaque réaction, en un ordre quelconque, séparée de la phase liquide, lavée, séchée et éventuellement étuvée.

9. Procédé pour la préparation de composés polymères de type organosiloxane-ammonium contenant du platine selon les revendications 1 à 3, caractérisé en ce que l'on fait réagir un composé polymère de type organosiloxane-amine, constitué d'unités de formule :

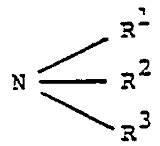

(3)

dans laquelle $R^1$, $R^2$ et $R^3$ ont les mêmes significations que dans la revendication 1, avec des quantités stœchiométriques, plus faibles ou en excès de

$H_2PtCl_6$ ou de $H_2PtBr_6$

éventuellement hydratés, dans l'eau ou dans un alcool inférieur ayant 1-5 atomes de carbone, selon le principe statique ou dynamique, à la température ambiante ou à une température plus élevée, et on procède ensuite, à la suite du traitement selon la revendication 7.

10. Procédé pour la modification de composés polymères de type organosiloxane-ammonium contenant du platine et/ou du palladium, préparables selon les revendications 7 à 9, caractérisé en ce qu'ils sont soumis à un post-traitement avec des réducteurs à des pressions totales allant de 1 à 300 bars et à des températures de — 100 à 350 °C.

11. Utilisation des composés polymères de type organosiloxane-ammonium contenant du platine et/ou du palladium selon les revendications précédentes, en tant que catalyseurs de réactions d'hydroxylation et d'hydrogénation.